# DEMANDE DE BREVET EUROPEEN

(11) **EP 2 536 061 A1**
(43) Date de publication de la demande: **19.12.2012**
(21) Numéro de dépôt: 11305745.9
(22) Date de dépôt: 14.06.2011
(51) Int. Cl.: H04L 9/32

(54) **Procédé de gestion d'une pseudo-identité intrinsèque à un dispositif**

(71) Demandeur: Gemalto SA, 92190 Meudon (FR)
(72) Inventeur: Barral, Claude, 13119 St SAVOURNIN (FR)

(57) **Abrégé**

L'invention décrit un procédé d'authentification d'un individu et d'un dispositif électronique, au travers d'une seule et même information dite pseudo-identité. Cette pseudo identité est la réponse d'une fonction PUF ayant reçu une information biométrique en guise de challenge.

## Description

L'invention concerne un procédé d'authentification croisée d'une personne et d'un dispositif électronique.

L'invention porte en particulier sur l'association d'une fonction Physique inclonable et d'une donnée biométrique.

Les composants électroniques connaissent une technologie comparable à la biométrie, appelée Fonction Physiques inclonables, PUF en anglais (pour Physical Unclonable Function). Le Principe des PUFs se base sur le fait que le comportement physique d'un composant électronique est aléatoire et inclonable. Le terme de fonction, utilisé ici désigne une étape qui, à une donnée d'entrée, fournit une donnée de sortie. Généralement les fonctions au sens des PUFs ne sont pas des fonctions au sens mathématiques du terme. Nous parlerons de challenge pour désigner les entrées d'une telle fonction, et de réponse pour désigner la valeur mesurée dans le cadre du PUF.

Cette particularité vient du fait que les composants électroniques sont tous différents, de par leur structure physique. Un PUF tend à mettre en lumière ces différences entre les composants.

La sécurité d'un système ou d'une donnée, passe généralement par l'authentification de l'utilisateur qui tente d'y accéder. De nombreuses solutions sont connues pour authentifier un utilisateur, basées sur tout ou partie des 3 facteurs communément admis d'authentification :
- Ce que l'on sait,
- Ce que l'on est,
- Ce que l'on a.

« Ce que l'on sait » fait référence à une connaissance que seul l'utilisateur est sensé avoir, par exemple un code secret.

« Ce que l'on est » fait référence à la nature de la personne, dans ce qu'elle a de plus distinctif. Ce point est généralement solutionné par la biométrie. La biométrie est basée sur la reconnaissance de particularités physiques ou comportementales.

Une donnée biométrique est généralement composée des points caractéristiques de la composante physique ou comportementale mesurée. Par exemple une empreinte digitale est analysée au regard des minuties qui la composent, les minuties étant des points caractéristiques de l'empreinte (par exemple des fins de lignes, des bifurcations de lignes ...)

« Ce que l'on a » est basé sur une possession que seul l'utilisateur est sensé avoir, par exemple une carte à puce personnelle.

Si la présence d'un objet est toujours vérifiable, il est à ce jour très difficile de s'assurer de l'authenticité d'un tel objet. Si la présence d'un secret, enregistré de manière sécurisé dans un dispositif tel qu'une carte, donne un fort indice de confiance, il n'est pas certain que l'objet en question n'a pas été altéré, et qu'il est donc conforme à son état de sécurité théorique .

Des dispositifs tentent de pallier ce point par des solutions dites « tamper évident », à savoir dont toute modification laisse des traces visibles.

Ces solutions sont inefficaces face à une utilisation automatisée d'un dispositif, par exemple au travers d'un dispositif électronique, ou bien lors d'une utilisation distante.

De la même manière, le dispositif électronique utilisé pour l'authentification peut lui aussi faire l'objet de modification ou de substitution. Nous sommes par exemple dans le cas d'un faux lecteur de carte, destiné à tromper l'utilisateur.

Les composants électroniques connaissent une technologie comparable à la biométrie, appelée Fonction Physique Inclonable, PUF en anglais (pour Physical Unclonable Function). Le Principe des PUFs se base sur le fait que le comportement physique d'un composant électronique est aléatoire, constant et inclonable.

La dimension aléatoire désigne ici le fait que ce comportement est imprédictible, et différent pour chacun des composants, mêmes issus d'une même chaine de fabrication, avec les mêmes spécifications.

La constance ici, fait référence au fait qu'un tel comportement, dans un composant, est constant. En effet, ce comportement est lié à la structure même du ou des composants, et sera donc constante tant que le ou les composants ne sont pas physiquement modifié ou altéré.

L'inclonabilité vient du fait qu'il n'est pas possible, lors de la fabrication de présumer de ces comportements, il est donc impossible de construire un composant avec un tel comportement prédéfini.

Le PUF tend ainsi à mesurer un tel comportement.

Nous noterons que le terme de fonction, utilisé ici désigne une étape qui, à une donnée d'entrée, fournit une donnée de sortie. Généralement les fonctions au sens des PUFs ne sont pas des fonctions au sens mathématiques du terme. Nous parlerons de challenge pour désigner les entrées d'une telle fonction, et de réponse pour désigner la valeur mesurée dans ne cadre du PUF.

Il existe deux familles majeures de PUF adaptés aux composants électroniques, les PUFs basés sur les délais, et les PUFs basés sur la mémoire.

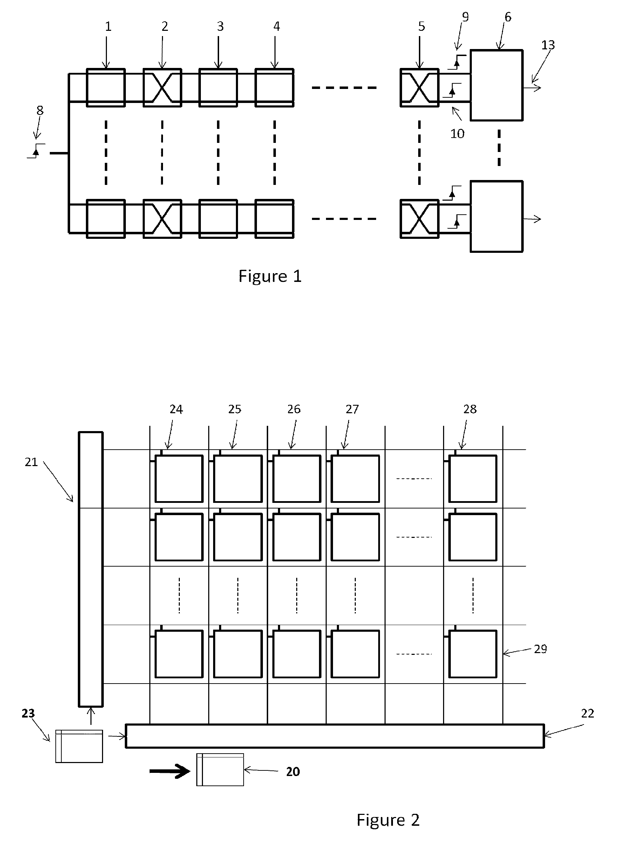

Les PUFs basés sur les délais:
Cette technologie, notamment sa version connue sous le nom de « Arbiter PUF », permet d'identifier un composant électronique au travers d'une analyse des délais de réponse d'une fonction dédiée au sein de ce composant.
Comme illustré dans la figure 1, un signal électrique 8 est envoyé simultanément aux deux entrées d'un circuit dédié composé de n éléments (1 à 5). Ce circuit est composé de deux chemins, qui traversent chacun des éléments. La somme des temps de traversée de chacun de ces éléments par un signal est unique. Ainsi les délais de parcours de chacun des chemins est unique, notamment d'un composant à l'autre.

Chacun des éléments 1 à 5 qui composent le circuit dédié, peut avoir 2 états, en fonction d'un paramètre binaire. Par exemple, si ce paramètre est un « zéro », les deux chemins traversent l'élément sans être manipulés (l'état de l'élément est dit « droit », comme par exemple les éléments 1, 3 et 4 de la figure 1). Si ce paramètre est un « un », les deux chemins traversent l'élément en étant tous les deux réorientés (l'état de l'élément est dit « croisé », comme par exemple les éléments 2, et 5 de la figure 1). Appliqué à une telle fonction PUF, le challenge permet de contrôler l'état de chacun des éléments qui composent le circuit.

Un élément particulier, dit « arbitre » 6, produit un bit de réponse 13, qui vaut « un » ou « zéro », en fonction du chemin, 9 ou 10, par lequel le premier signal est arrivé. Le temps de parcours de chacun des chemins par un signal étant unique, et le chemin étant dépendant des états des éléments qui le composent assurent l'unicité de la réponse PUF du circuit, tant au regard du composant qu'au regard du challenge.

Il est possible d'avoir autant de chaines, 1 à 5 et 6, qu'il est souhaité de bit dans la réponse, chacune des chaines fournissant un bit. Chacune de ces chaines étant composé d'éléments propres, le temps de parcours des chemins qui la compose est donc unique au sens du PUF.

Si le même challenge est appliqué à un autre composant dédié, les états des éléments seront identiques, mais les temps de parcours des éléments qui le composent par le signal seront différents. De même, si un autre challenge est appliqué à la fonction de sélection PUF sur le même composant, la réponse sera différente car les états des éléments ne seront pas les mêmes.

Les PUFs basés sur la mémoire :
Cette technologie, illustrée par la figure 2, est basée sur l'incertitude de la valeur d'un point mémoire SRAM (numérotés 24 à 29) au démarrage du composant électronique. Il a été prouvé qu'un certain nombre de points mémoires (notamment SRAM), parmi l'ensemble de la mémoire disponible, ont une valeur identique à chaque démarrage d'un même composant tout en étant différents d'un composant à l'autre d'une même famille. Une fonction PUF basée sur la mémoire exploite cette particularité, en relevant les valeurs de tout ou partie des points mémoires du composant mémoire, et à appliquer ensuite une fonction de sélection dépendant d'un challenge.

Ainsi, par exemple pour obtenir une réponse 20 de 256 bits parmi 2 kilo-octets de SRAM, il est possible d'utiliser un challenge 23 dans une fonction de sélection 21 et 22. La réponse étant la valeur (zéro ou un) des points mémoire sélectionnés lors du démarrage du composant SRAM.

Si le même challenge est appliqué à un autre composant mémoire, les valeurs sélectionnées seront différentes. De même, si un autre challenge est appliqué à la fonction de sélection PUF sur le même composant, la réponse sera différente car les points mémoires sélectionnés ne seront pas les mêmes.

Cette technologie présente l'avantage de pouvoir dissocier la fonction de sélection selon le PUF, du composant mémoire analysé. En effet, il est possible de lire un composant mémoire lors de son démarrage, et d'envoyer cette lecture à un autre composant, qui fera la fonction de sélection à partir du challenge, et obtiendra la réponse.

Cette technologie permet d'obtenir une réponse, en appliquant un challenge à une fonction PUF. Si cette réponse est identique à une réponse de référence, on peut en conclure que la réponse de référence a été obtenue en appliquant le même challenge à la même fonction PUF (même composant électronique).

La présente invention propose un procédé d'authentification tant de l'utilisateur que du ou des dispositifs électroniques utilisés, palliant à l'ensemble de ces inconvénients.

Plus précisément, l'invention décrit un procédé d'authentification d'un individu ainsi que d'un premier dispositif électronique comprenant une fonction physique inclonable dite PUF. Ce procédé comprend au moins les étapes :
- capture d'une information biométrique d'un individu,
- injection de cette information biométrique en tant que challenge de la fonction PUF afin d'obtenir une réponse dite réponse candidate,
- comparaison de cette réponse candidate avec une information d'identification dite réponse de référence,
- en fonction du résultat de cette comparaison, valider, ou non, l'authentification de l'individu et du premier dispositif électronique.

Dans un mode d'implémentation, le premier dispositif électronique peut comporter un moyen de capture, apte à fournir l'information biométrique, la réponse de référence peut alors être enregistrée dans une mémoire non volatile contenue dans le premier dispositif électronique, ou bien dans une mémoire non volatile contenue dans un second dispositif électronique. Si la réponse de référence est enregistrée dans une mémoire non volatile contenue dans le second dispositif électronique, elle peut être transmise par le second dispositif électronique, au premier dispositif électronique.

Dans un autre mode d'implémentation du procédé selon l'invention, un second dispositif électronique comportant un moyen de capture, est apte à fournir, au premier dispositif électronique, l'information biométrique. La réponse de référence peut être enregistrée dans une mémoire non volatile contenue dans le premier dispositif électronique, ou bien dans une mémoire non volatile contenue dans le second dispositif électronique. Si la réponse de référence est enregistrée dans une mémoire non volatile contenue dans le second dispositif électronique, elle peut être transmise par le second dispositif électronique, au premier dispositif électronique.

Le procédé selon l'invention, peut comporter une étape de traitement dit traitement1, de l'information biométrique entre l'étape de capture, et l'injection de l'information biométrique en tant que challenge de ladite fonction PUF.

Le procédé selon l'invention, peut comporter une étape de traitement dit traitement2, de la réponse candidate, préalablement à l'étape de comparaison.

Ces traitements : traitement1 ou traitement2, peuvent être par exemple une fonction de hachage, une fonction de sélection, ou bien une fonction à décalage.

Un autre avantage de l'invention est de faire une authentification biométrique sans utiliser d'empreinte de référence, ce qui permet d'augmenter grandement la protection de la vie privée des utilisateurs, ainsi que la sécurité des dispositifs. En effet, le stockage d'une empreinte biométrique de référence est critique, car par définition cette donnée est fortement liée à l'individu duquel elle a été extraite. Ainsi, la divulgation éventuelle d'une telle donnée pose de grands problèmes de protection de la vie privée.

Dans la solution décrite dans la présente invention, la donnée de référence n'est aucunement une donnée biométrique, elle n'est que le résultat d'un calcul effectué à partir d'une donnée biométrique. Il est donc impossible d'extraire, d'une réponse de référence selon l'invention, une quelconque donnée d'identification de l'utilisateur. Cette donnée de référence, aussi appelée pseudo-identité, est liée, tant à l'individu ayant fourni les informations biométriques, qu'au composant ayant permis de calculer la réponse. On parlera de pseudo-identité intrinsèque au composant.

De plus, le procédé selon l'invention propose une diversification naturelle des données. En effet, la réponse de référence selon l'invention est calculé en fonction d'une information biométrique, et d'un composant, donc la même donnée biométrique, utilisée dans des contextes différents, donnera autant de réponses de référence différentes les unes des autres. Une réponse de référence sera par exemple obtenue à partir de l'information biométrique et du PUF d'une carte d'identité électronique, une autre réponse de référence sera par exemple obtenue à partir de l'information biométrique et du PUF d'un passeport électronique. Chacune de ces réponse de référence, bien que obtenues à partir d'un même challenge, n'ont aucun point commun.

Cette spécificité empêche une éventuelle mise en corrélation de différentes bases de données, et donc rend impossible de recouper les informations présentes dans différentes bases de données.

L'ensemble de ces caractéristiques d'une réponse de référence permet d'utiliser l'invention dans des contextes à sécurité réduite, sans craindre une éventuelle fuite d'information exploitable.

D'autres caractéristiques et avantages de l'invention ressortiront clairement de la description qui en est faite ci-après, à titre indicatif et nullement limitatif, en référence aux dessins annexés dans lesquels :
- La figure 1 représente un exemple de fonction PUF basée sur le délai conforme à l'art antérieur.
- La figure 2 représente un exemple de fonction PUF basée sur la mémoire conforme à l'art antérieur.
- La figure 3 représente une implémentation de l'invention dans laquelle un lecteur d'empreinte digitale communique avec un passeport sans contact pour authentifier un utilisateur selon l'invention.
- La figure 4 représente schématiquement le fonctionnement d'une fonction PUF.
- La figure 5 représente schématiquement le fonctionnement d'une fonction PUF selon l'invention avec un pré-traitement.
- La figure 6 représente schématiquement le fonctionnement d'une fonction PUF selon l'invention avec un post-traitement.

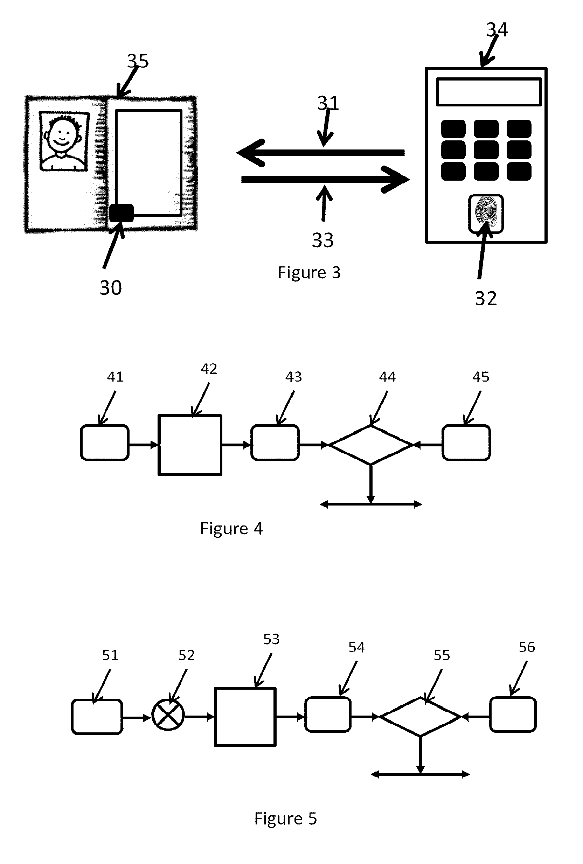

Comme illustré dans la figure 4, le challenge 41, selon l'invention est une information biométrique, identifiant l'utilisateur, la fonction PUF 42 identifie le composant, une réponse 43 comparée 44 avec succès à une réponse de référence 45, authentifie donc ces deux acteurs.

La figure 3 illustre un exemple d'implémentation de l'invention dans le contexte d'un document d'identité électronique. Ce document électronique est représenté par un passeport 35. Ce passeport 35 contient une fonction PUF 30. Cette fonction est ici embarquée dans un composant de type puce électronique. Ce composant électronique comporte, dans une mémoire non volatile, une donnée dite « réponse de référence ».

La réponse de référence a été obtenue par la présentation d'une donnée biométrique du possesseur légitime du passeport, à cette fonction PUF, sur ce passeport. Cette réponse de référence se fait de préférence dans des conditions de sécurité optimales, par exemple en présence d'un officier de sécurité, apte à vérifier l'identité de l'utilisateur, lors de la remise du passeport.

Le passeport 35 peut être remplacé, selon l'invention, par tout dispositif électronique, de préférence portable, par exemple une carte à puce, une clef USB, un téléphone portable, etc...

Le passeport 35 est mis en relation avec un lecteur d'empreinte digitale 34. Cette mise en relation peut se faire par tout moyen de communication connu de l'homme de l'art, notamment radiofréquence (RFID, WIFI, Bluetooth, NFC, ...), infrarouge, ou bien par une connexion électrique physique (à contact).

L'utilisateur présentant son passeport 35, saisie son empreinte digitale 32. Dans ce mode d'implémentation, l'empreinte digitale est traitée dans le lecteur 34, afin d'en extraire une donnée biométrique 31. Cette extraction permet de réduire l'empreinte 32 à ses points caractéristiques. Dans l'exemple de la figure 3, l'empreinte digitale 32 est réduite à l'ensemble ses minuties 31. Ces minuties 31 sont envoyées au passeport 35.

Les minuties 31 de la figure 3, sont fournies à la fonction PUF en tant que Challenge, qui en retour fournit une réponse dite réponse candidate. Cette réponse est comparée par le composant électronique du passeport avec la réponse de référence. Le résultat de cette comparaison est envoyé, ici au lecteur 34, qui présente à l'utilisateur la conclusion de son authentification. Une authentification positive confirmera que l'utilisateur est bien celui qui a été enregistré lors de remise du passeport, et également que le passeport présenté 5 contient bien le composant électronique qui lui a été associé lors de sa mise en circulation.

Une autre implémentation de l'invention est basée sur une comparaison de la réponse de référence, et de la réponse candidate, par le lecteur 34, ou en tout cas un dispositif électronique dissocié du passeport. Cette solution propose de vérifier que la réponse de référence n'a pas été modifiée. Des moyens de cryptographie connus peuvent assurer cette vérification, par exemple au travers de signature, ou de certificats, réalisés lors de la création de la réponse de référence, par exemple par l'officier de sécurité cité ci-dessus. Dans ce mode de réalisation, la comparaison finale est faite par le lecteur qui va pouvoir attester que l'utilisateur est bien celui à qui a été fournit le passeport, et que le passeport n'a pas été altéré.

Un troisième mode d'implémentation propose de ne pas enregistrer les réponses de référence dans le passeport 35, mais dans une mémoire accessible directement par le lecteur 34, par exemple dans une base de données distante. Cette solution est rendue possible car la réponse de référence ne contient aucune information intelligible, ni par l'homme ni par une machine, sur l'utilisateur, et ainsi ne met pas en danger le respect de la vie privée.

Dans ce mode d'implémentation de l'invention, la réponse envoyée par le passeport au lecteur est en fait la réponse candidate du PUF. Le terminal charge sur la base de donnée distante la réponse de référence associée, soit au passeport, soit à l'utilisateur, et, en comparant les deux, s'assure que le passeport est bien celui qui a été délivré, et que l'utilisateur est également celui a qui a été délivré le passeport. Cette solution est particulièrement adaptée à des populations réduites, ou bien à des populations localement regroupées, par exemple de la gestion d'identité à l'intérieur d'une entreprise ou d'une organisation.

Une implémentation particulière de l'invention peut intégrer la fonction PUF dans le lecteur 34. Dans ce cas, le but est de vérifier à la fois l'identité de l'utilisateur, mais également le lecteur 34. En effet, dans ce cas la réponse de référence doit avoir été obtenue sur ce même lecteur 34 pour que l'authentification fonctionne. Ce mode d'implémentation peut être associé à l'enregistrement, dans le passeport, d'une pluralité de réponse de référence, obtenue avec le même utilisateur, mais sur l'ensemble des lecteurs 34 acceptés. Dans ce mode d'implémentation, le lecteur 34 applique les données biométriques en tant que challenge à la fonction PUF qu'il contient, et envoie la réponse candidate ainsi obtenue au passeport qui effectue une comparaison avec l'ensemble des réponses de références qu'il contient. Si aucune comparaison n'est concluante, cela signifie que, soit l'utilisateur n'est pas le bon, soit le lecteur 34 n'est pas un des lecteurs autorisé.

La figure 5 illustre un mode d'implémentation de l'invention dans lequel un traitement 52, dit pré-traitement, est appliqué à la donnée biométrique 51, avant son utilisation comme challenge de la fonction PUF 53. L'invention s'applique avantageusement à tout traitement reproductible d'une donnée biométrique capturée. Un traitement reproductible est un traitement qui peut être reproduit à l'identique. Ainsi, une fonction de sélection, une fonction de hachage, une fonction à décalage, etc., sont des fonctions reproductibles selon l'invention.

L'utilisation de telles fonctions peut, par exemple, servir à adapter la taille de la donnée biométrique, avant son utilisation en tant que challenge de la fonction PUF.

La donnée biométrique 51, une fois traitée par la fonction 52, est utilisée comme challenge de la fonction PUF 53. La réponse candidate 54 qui en ressort est comparée 55 avec une réponse de référence 56 afin de valider ou non l'authentification selon l'invention.

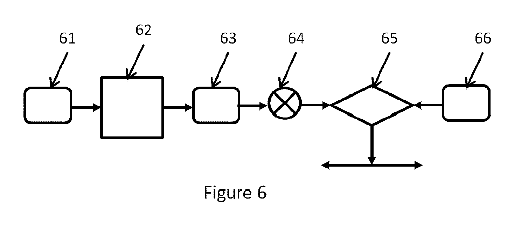

Dans un mode d'implémentation illustré dans la figure 6, la réponse 63 de la fonction PUF 62, peut faire l'objet d'un traitement reproductible 64, dit post-traitement, avant son utilisation 65. Un traitement reproductible est un traitement qui peut être reproduit à l'identique. Ainsi, une fonction de sélection, une fonction de hachage, une fonction à décalage, etc., sont des fonctions reproductibles selon l'invention.

L'utilisation de telles fonctions peut, par exemple, servir à adapter la taille de la réponse 63 avant son enregistrement s'il s'agit d'une réponse de référence, ou bien avant sa comparaison 65 s'il s'agit d'une réponse à vérifier. Une telle adaptation de taille peut optimiser les performances de la comparaison, par exemple en l'adaptant à la taille d'un BUS informatique du composant réalisation cette étape de comparaison.

La donnée biométrique 61, est utilisée comme challenge de la fonction PUF 62. La réponse candidate 63 qui en ressort est traitée par la fonction 64, avant d'être comparée 65 avec une réponse de référence 66 afin de valider ou non l'authentification selon l'invention.

Les données biométriques 32, 41, 51, 61, peuvent être conforme à toute biométrie capturable et mesurable connues, notamment reconnaissance d'iris, d'empreinte digitale, reconnaissance morpho palmaire, reconnaissance faciale, reconnaissance d'un schéma vasculaire, etc...

La fonction PUF 30, 42, 53, 62, peut être, selon l'invention, indifféremment basée sur le délai ou bien basée sur la mémoire ou tout autre technologie de PUF.

## Revendications

1. Procédé d'authentification d'un individu ainsi que d'un premier dispositif électronique comprenant une fonction physique inclonable dite PUF,
**caractérisé en ce qu'**il comprend au moins les étapes :
- capture d'une information biométrique (32, 41, 51, 61) d'un individu,
- injection de ladite information biométrique en tant que challenge de ladite fonction PUF (30, 42, 53, 62) afin d'obtenir une réponse (43, 54, 63) dite réponse candidate,
- comparaison (44, 55, 65) de ladite réponse candidate avec une information d'identification dite réponse de référence (45, 56, 66),
- en fonction du résultat de ladite comparaison, valider, ou non, l'authentification dudit individu et dudit premier dispositif électronique.

2. Procédé d'authentification selon la revendication 1, **caractérisé en ce que** ledit premier dispositif électronique comporte un moyen de capture, apte à fournir ladite information biométrique.

3. Procédé d'authentification selon la revendication 2, **caractérisé en ce que** ladite réponse de référence est enregistrée dans une mémoire non volatile contenue dans ledit premier dispositif électronique.

4. Procédé d'authentification selon la revendication 2, **caractérisé en ce que** ladite réponse de référence est enregistrée dans une mémoire non volatile contenue dans un second dispositif électronique.

5. Procédé d'authentification selon la revendication 4, **caractérisé en ce que** ladite réponse de référence est transmise, par ledit second dispositif électronique, audit premier dispositif électronique.

6. Procédé d'authentification selon la revendication 1, **caractérisé en ce qu'**il comporte un second dispositif électronique comportant un moyen de capture, apte à fournir, audit premier dispositif électronique, ladite information biométrique.

7. Procédé d'authentification selon la revendication 6, **caractérisé en ce que** ladite réponse de référence est enregistrée dans une mémoire non volatile contenue dans ledit premier dispositif électronique.

8. Procédé d'authentification selon la revendication 6, **caractérisé en ce que** ladite réponse de référence est enregistrée dans une mémoire non volatile contenue dans ledit second dispositif électronique.

9. Procédé d'authentification selon la revendication 8, **caractérisé en ce que** ladite réponse de référence est transmise, par ledit second dispositif électronique, audit premier dispositif électronique.

10. Procédé d'authentification selon l'une quelconque des revendications 1 à 9, **caractérisé en ce que** l'on applique, à ladite information biométrique, un traitement dit traitement1, entre l'étape de capture, et l'injection de ladite information biométrique en tant que challenge de ladite fonction PUF.

11. Procédé d'authentification selon l'une quelconque des revendications 1 à 10, **caractérisé en ce que** l'on applique, à ladite réponse candidate, un traitement dit traitement2, préalablement à l'étape de comparaison de ladite réponse candidate.

12. Procédé d'authentification selon l'une quelconque des revendications 10 ou 11, **caractérisé en ce que** l'un quelconque desdits traitement1 ou traitement2 est une fonction de hachage.

13. Procédé d'authentification selon l'une quelconque des revendications 10 ou 11, **caractérisé en ce que** l'un quelconque desdits traitement1 ou traitement2 est une fonction de sélection.

14. Procédé d'authentification selon l'une quelconque des revendications 10 ou 11, **caractérisé en ce que** l'un quelconque desdits traitement1 ou traitement2 est une fonction à décalage.
